(19) Europäisches Patentamt
European Patent Office
Office européen des brevets

(11) **EP 4 693 163 A2**

(12) **EUROPEAN PATENT APPLICATION**

(43) Date of publication:
**11.02.2026   Bulletin 2026/07**

(21) Application number: **25208627.7**

(22) Date of filing: **09.12.2021**

(51) International Patent Classification (IPC):
**G06T 1/00** (2006.01)

(52) Cooperative Patent Classification (CPC):
**G06T 1/00;** G06T 2207/10004; G06T 2207/10016;
G06T 2207/20081; G06T 2207/20084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2021   GR 20210100777**

(62) Document number(s) of the earlier application(s) in
accordance with Art. 76 EPC:
**21213508.1 / 4 177 822**

(71) Applicant: **Sony Interactive Entertainment Europe
Limited
London W1F 7LP (GB)**

(72) Inventors:
• **CHADHA, Aaron
London, E1W 3NX (GB)**
• **ANDREOPOULOS, Ioannis
London, E1W 3NX (GB)**
• **TREDER, Matthias
London, E1W 3NX (GB)**

(74) Representative: **Gill Jennings & Every LLP
The Broadgate Tower
20 Primrose Street
London EC2A 2ES (GB)**

Remarks:
•This application was filed on 14-10-2025 as a
divisional application to the application mentioned
under INID code 62.
•Claims filed after the date of filing of the application
/ after the date of receipt of the divisional application
(Rule 68(4) EPC)

(54) **PROCESSING IMAGE DATA**

(57)    A computer-implemented method of processing image data using a model of the human visual system. The model comprises a first artificial neural network system trained to generate the first output data using one or more differentiable functions configured to model the generation of signals from images by the human eye, and a second artificial neural network system trained to generate the second output data using one or more differentiable functions configured to model the processing of signals from the human eye by the human visual cortex. The method comprises receiving image data representing one or more images, processing the received image data using the first artificial neural network system to generate first output data, processing the first output data using a second artificial neural network system to generate second output data. Model output data is determined from the second output data, and output for use in an image processing process.

Fig. 1

**EP 4 693 163 A2**

## Description

Technical Field

The present disclosure concerns computer-implemented methods of processing image data using a model of the human visual system. The disclosure is particularly, but not exclusively, applicable where the image data is video data. The disclosure has application in image denoising, image compression, and improved efficiency of neural network inference on image data, for example.

## Background

Computer image processing, such as perceptual quality assessment, image compression, image denoising and neural network inference on image data, often uses low-level metrics such as mean squared error to quantify performance. However, image processing using mean squared error typically leads to blurry images that are not perceptually pleasing.

Recently, attempts have been made to overcome the shortcomings of mean squared error by modelling components of the human visual system, either explicitly or implicitly. Such attempts include the popular structural similarity metric (Wang, Zhou, et al. "Image quality assessment: from error visibility to structural similarity." IEEE transactions on image processing 13.4 (2004): 600-612) and its multiscale variant, which implicitly model response properties of retinal neurons by performing mean and variance normalization. For visual quality assessment, the Sarnoff Visual Discrimination Model explicitly approximates the point spread function of the eye's optics (Lubin, Jeffrey. "A visual discrimination model for imaging system design and evaluation." Vision Models for Target Detection and Recognition: In Memory of Arthur Menendez. 1995. 245-283). More recently, a normalized Laplacian model that underpins the frequency selectivity of the visual cortex has been proposed (Laparra, Valero, et al. "Perceptual image quality assessment using a normalized Laplacian pyramid." Electronic Imaging 2016.16 (2016): 1-6). Other known metrics that attempt to model aspects of the human visual system for reference-based image quality assessment are the visual information fidelity metric (Sheikh, Hamid R., and Alan C. Bovik. "A visual information fidelity approach to video quality assessment." The First International Workshop on Video Processing and Quality Metrics for Consumer Electronics. Vol. 7. No. 2. sn, 2005) and detail loss metric (Li, Songnan, et al. "Image quality assessment by separately evaluating detail losses and additive impairments." IEEE Transactions on Multimedia 13.5 (2011): 935-949), which are both components of the VMAF metric commercially adopted by Netflix and other large video companies (https://netflixtechblog.com/vmaf-the-journey-conti nues-44b51ee9ed12). Beyond visual quality assessment, there has been work in image/video coding such as DCT-Tune (Watson, Andrew B., Mathias Taylor, and Robert Borthwick. "DCTune perceptual optimization of compressed dental X-Rays." Medical Imaging 1997: Image Display. Vol. 3031. International Society for Optics and Photonics, 1997), which tunes the DCT quantization matrix based on the contrast sensitivity function.

However, a problem with known approaches is that they focus only on certain elements of the visual system, and use models that depend upon functions that are not necessarily differentiable. This means the models cannot be optimised by training directly on image or video data, but instead the parameters of the models must tuned manually via experimentation, which is onerous and lacks generalization.

The present disclosure seeks to solve or mitigate some or all of these above-mentioned problems. Alternatively and/or additionally, aspects of the present disclosure seek to provide improved methods of processing image data.

Summary

In accordance with a first aspect of the present disclosure there is provided a computer-implemented method of processing image data using a model of the human visual system, the model comprising:

a first artificial neural network system trained to generate the first output data using one or more differentiable functions configured to model the generation of signals from images by the human eye; and
a second artificial neural network system trained to generate the second output data using one or more differentiable functions configured to model the processing of signals from the human eye by the human visual cortex;
the method comprising:

receiving image data representing one or more images;
processing the received image data using the first artificial neural network system to generate first output data;
processing the first output data using a second artificial neural network system to generate second output data;
determining model output data from the second output data; and
outputting the model output data for use in an image processing process.

By having a model with a first artificial neural network system trained using functions that model the generation of signals from images by the human eye, and a second artificial neural network system trained using functions that model the processing of signals from the human eye by the human visual cortex, better perceptual quality results can be provided. This is because such a model is better able to process image data in a way that corresponds to the processing of images by the known neurophysiology of low-level and high-level human vision. In particular, the functions that model the generation of signals from images by the human eye can model known parts of the neurophysiological processes that generate those signals, while the functions that model the processing of signals from the human eye by the human visual cortex can model known neurophysiology of the human visual cortex. In this way, the method can incorporate known physiological and neurophysiological elements of low-level and high-level vision of humans. The model output data can then be advantageously be used in image processing methods, for example image encoding, compression, denoising, classification or the like.

In addition, importantly, by using artificial neural networks trained using differentiable functions, the model can be trained in an end-to-end manner using back-propagation learning and stochastic gradient descent. Consequently, it can be trained directly on image or video data, and so is fully learnable and does not require manual tuning of parameters via experimentation, which is onerous.

In embodiments, the method further comprises the step, prior to the first artificial neural network system processing the received image data, of transforming the received image data using a function configured to model the optical transfer properties of lens and optics of the human eye. In embodiments, the function is a point spread function configured to model the diffraction of light in the human eye when subject to a point source.

In embodiments, the one or more differentiable functions used to train the first artificial neural network system are configured to model the behaviour of the retina of the human eye. In embodiments, alternatively or additionally, the one or more differentiable functions used to train the first artificial neural network system are configured to model the behaviour of the lateral geniculate nucleus. In embodiments, the first artificial neural network system is trained using one or more contrast sensitivity functions. In particular, the one or more contrast sensitivity functions can be applied directly to the output activations of the neural network. Different contrast weightings can be used to model the different contrast response sensitivities of different pathways of the lateral geniculate nucleus. It is also known that the contrast response functions vary between the parvocellular and magnocellular pathways in the lateral geniculate nucleus, with in general, the magnocellular pathway being more sensitive to stimulus contrast.

In embodiments, the second artificial neural network system is a steerable convolutional neural network. The steerable convolutional neural network can have a steerable pyramid structure with trainable filter weights.

In embodiments, the model output data comprises a perceptual quality score for the image data. In embodiments, the model output data is determined by mapping the second output data to a perceptual quality score. In embodiments, the first and second artificial neural network systems are trained using a training set of image data and associated human-derived perceptual quality scores.

In embodiments, the model output data is image data. In embodiments, a decoder is used to determine the image data as a pixel representation from the second output data. In embodiments, the method further comprises the step of encoding the model output data using an image encoder to generate an encoded bitstream. In embodiments, the first and second artificial neural network systems are trained using a loss function that compares the received image data with images generated by decoding the encoded bitstream. In embodiments, the one or more loss functions compare using mean squared error, mutual information, or other comparison functions. In other embodiments, the method further comprises the step of compressing the model output data using an image compressor to generate compressed image data. In embodiments, the first and second artificial neural network systems are trained using a loss function that compares the received image data with images generated by decompressing the compressed image data. In other embodiments, the one of more loss functions may be determined using a modelling of the decoding or uncompressing of the model output data, or may be determined directly using the model output data.

In embodiments the model output data is the second output data, i.e. the model is trained so the second artificial neural network system directly outputs the required data.

In accordance with a second aspect of the present disclosure, there is provided a computer-implemented method of training a model of the human visual system, wherein the model comprises:

a first artificial neural network comprising a set of interconnected adjustable weights, and arranged to generate first output data from received image data using one or more differentiable functions configured to model the generation of signals from images by the human eye; and
a second artificial neural network comprising a set of interconnected adjustable weights, and arranged to generate second output data from first output data using one or more differentiable functions configured to model the processing of signals from the human eye by the human visual cortex;
the method comprising:

receiving image data representing one or more images;

processing the received image data using the first artificial neural network to generate first output data;

processing the first output data using the second artificial neural network to generate second output data;

deriving model output data from the second output data;

determining one or more loss functions based on the model output data; and

adjusting the weights of the first and second artificial neural networks based on back-propagation of values of the one or more loss functions.

In embodiments, the model is trained using training data comprising image data and associated human-derived perceptual quality scores. In other embodiments, other quality scores can be used.

In other embodiments, the one or more loss functions compare the received image data with images generated by decoding an encoded bitstream, wherein the encoded bitstream is generated from the model output data using an image encoder.

In other embodiments, the one or more loss functions compare the received image data with images generated by decompressing compressed image data, wherein the compressed image data is generated from the model output data using an image compressor.

In accordance with a third aspect of the disclosure there is provided a computer-implemented method of training an artificial neural network, wherein the artificial neural network comprises a set of one or more convolutional layers of interconnected adjustable weights, and is arranged to generate first output data from received image data using one or more differentiable functions, the method comprising:

receiving image data representing one or more images;

processing the received image data using the artificial neural network to generate output data;

determining one or more output loss functions based on the output data;

determining one or more selectivity loss functions based on the selectivity of one or more layers of the set of convolutional layers of interconnected adjustable weights; and

adjusting the weights of the artificial neural network based on back-propagation of values of the one or more output loss functions and one or more selectivity loss functions.

In this way, a differentiable model of the known neurophysiology of low-level and high-level human vision can be realised. However, instead of using neural building blocks that mimic visual system behaviour, this method can take be performed on existing differentiable neural network architectures (e.g. VGG-19, ResNet). A set of psychovisual constraints can be applied during training using the selectivity loss functions, to give trained behaviour that is in accordance with aspects of the human visual system. Here, "psychovisual constraints" refers the imposition of constraints such that the elements of the model (e.g. convolutional layers) show response properties akin to those of visual neurons in the human visual systems.

In embodiments, the one or more selectivity loss functions are based on the selectivity of the one or more layers to spatial frequencies and/or orientations and/or temporal frequencies in the received image data. In other embodiments, selectivity to other properties of the received image data may be used.

The artificial neural network may have VGG-19, ResNet, or any other type of neural network architecture that involves convolutional layers, including custom architectures.

In accordance with a fourth aspect of the disclosure there is provided a computing device comprising:

a processor; and

memory;

wherein the computing device is arranged to perform using the processor any of the methods described above.

In accordance with a fifth aspect of the disclosure there is provided a computer program product arranged, when executed on a computing device comprising a processor or memory, to perform any of the methods described above.

It will be appreciated that features described in relation to one aspect of the present disclosure described above may be incorporated into other aspects of the present disclosure.

Description of the Drawings

Embodiments of the present disclosure will now be described by way of example only with reference to the accompanying schematic drawings of which:

Figure 1 is a schematic diagram of a model of the low-level neurophysiology of the human visual system for perceptual quality assessment in accordance with embodiments;

Figure 2 is a flowchart showing the steps of a method of processing image data to generate a perceptual quality score in accordance with embodiments;

Figures 3(a) to 3(c) are schematic diagrams showing a neural network in accordance with embodiments;

Figure 4(a) is a graph showing contrast sensitivity function of a neuron in the parvocellular layers of a monkey lateral geniculate nucleus;

Figure 4(b) is a graph showing contrast sensitivity function of size neurons in area V1 of a monkey;

Figure 4(c) is a graph showing the response of several individual lateral geniculate nucleus cells and their mean response;

Figure 5 is a schematic diagram of a contrast sensitivity function in accordance with embodiments;

Figure 6(a) is a schematic diagram of contrast gain control in accordance with embodiments;

Figure 6(b) is a schematic diagram of an implementation for pooling weighted neighbouring responses via a 3D convolution in accordance with embodiments;

Figure 7 is a schematic diagram of a steerable pyramid architecture in accordance with embodiments;

Figure 8 is a schematic diagram of a steerable convolutional neural network in accordance with embodiments;

Figure 9 is a schematic diagram of a model of known parts of the neurophysiology of low-level human vision for image encoding in accordance with embodiments;

Figure 10 is a flowchart showing the steps of a method of processing image data to encode image data in accordance with embodiments;

Figure 11 is a flowchart showing the steps of a method of training a model of known parts of neurophysiology of low-level human vision in accordance with embodiments;

Figure 12 is a schematic diagram of a computing device in accordance with embodiments;

Figure 13 is a schematic diagram giving examples for the imposition of psychovisual constraints on convolutional layers;

Figure 14 is a schematic diagram of a neural compression framework in accordance with embodiments;

Figure 15 is a schematic diagram of a precoder in accordance with embodiments;

Figure 16 are graphs showing results of the use of a concrete realisation of the precoder of Figure 15;

Figure 17 is a schematic diagram of a denoiser in accordance with embodiments; and

Figure 18 is a schematic diagram of an image or video classifier in accordance with embodiments.

Detailed Description

Embodiments of the present disclosure are now described.

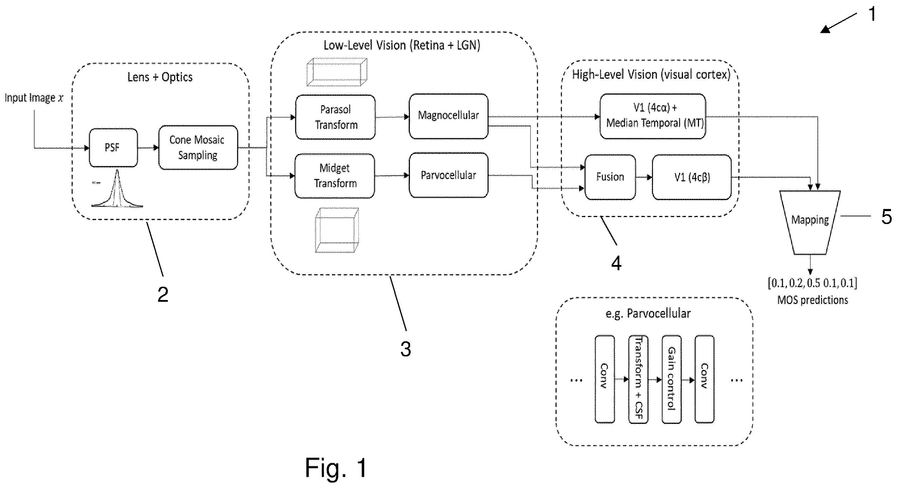

Figure 1 is a schematic diagram of a model 1 of the human visual system for perceptual quality assessment in accordance with embodiments. The model 1 receives image data, and from this image data generates as output perceptual quality scores for the image data. As discussed below, in other embodiments models may generated other types of output from received image data, and/or generated output may be used for other applications, such as video encoding or image compression.

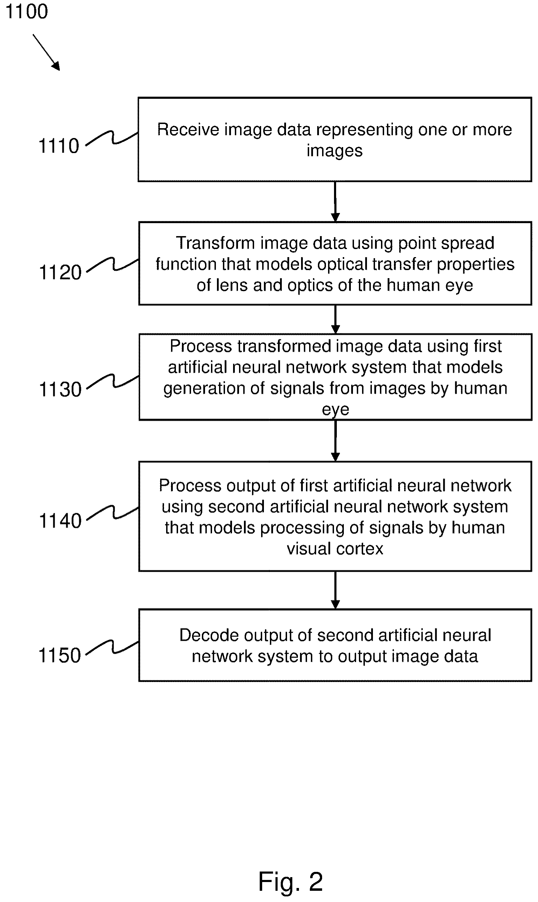

Figure 2 is a corresponding flowchart of a method 1000 for using the model 1 to process image data to generate a perceptual quality score, in accordance with embodiments. The method 1000 may be performed by a computing device, according to embodiments. The method 1000 may be performed at least in part by hardware and/or software.

At the first step 1010 of the method, image data representing one or more images is received. The image data may be retrieved from storage (e.g. in a memory), or may be received from another entity.

At the next step 1020 of the method, the received image data is transformed using a first stage 2 of the model 1. The first stage 2 models the optical transfer properties of the lens and optics of the human eye.

In the human eye, an image is received by photoreceptors on the retina surface. There are two fundamental types of photoreceptor: rods and cones. Rods provide vision under low illumination (scotopic) levels, while cones provide vision under high illumination (photopic) levels. Importantly, the distribution of photoreceptors on the retina surface controls which parts of the retinal image can stimulate vision. For example, the region of highest visual acuity in the human retina is the fovea, which contains the highest concentration of cones.

To model this optical behaviour, the first stage 2 takes as input the received image data and performs a spatial resampling to account for the fixed density of cones in the fovea. This is done by transforming the input using a point spread function which represents the diffraction of light in the human eye when subject to a point source. The composition of point spread function and cone mosaic sampling follows the eye modelling of the Sarnoff Visual Discrimination Model, but in other embodiments of the invention can also be extended to distinguish between different types of cones (L, S and M).

Under optimal viewing conditions modelling of lens and optics is not required, and in some embodiments the modelling of the optical transfer properties of the lens and optics is omitted.

At the next step 1030 of the method, the transformed image data output by the first stage 2 is processed by a second stage 3 of the model 1. The second stage 3 of the model 1 models low-level vision in the human eye, in particular the generation of signals from images by the retina and lateral geniculate nucleus of the human eye.

The photoreceptors of the retina of the human eye make connections onto the dendrites of retinal ganglion cells within the inner plexiform layer via bipolar cells in the outer plexiform layer. The axons of the retinal ganglion cells provide the only retina output signal and exit at a single point in the retina called the optic disk. Ganglion cells can be classified into two types with varying properties: midget or parasol. The parvocellular pathway exists between the midget ganglion cells and the parvocellular layers of the lateral geniculate nucleus, which connects the retinal output to the primary visual cortex. Similarly, the magnocellular pathway exists between the parasol ganglion cells and the magnocellular layers of the lateral geniculate nucleus. An importance distinction between these pathways is that the magnocellular pathway carries only low spatial frequency and high temporal frequency information, whereas the parvocellular pathway carries high spatial frequency and low temporal frequency information from the photoreceptors.

The second stage 3 of the model 1 models these two pathways as a two streams of convolutional neural networks (CNNs). Each stream takes as input the output of the first stage 2, which corresponds to the retina image, and which has been appropriately mapped with a non-linear or linear transform depending on the pathway frequency information.

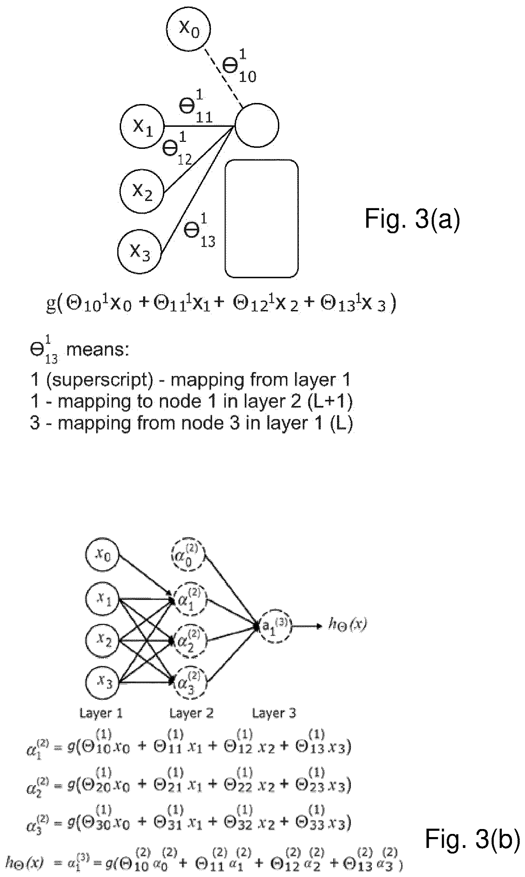

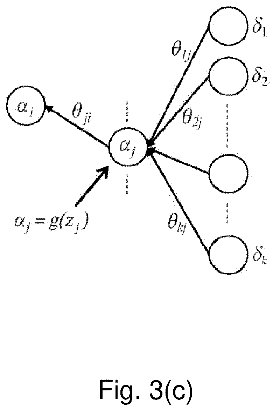

All CNNs consist of a cascade of convolutional Conv ($k \times k$) layers of weights connected in a network and having activation functions, here mapping input pixel groups to transformed output pixel groups. An example of such connections and weights is shown in Figure 3(a). An example of the global connectivity between weights and inputs is shown in Figure 3(b). That is, Figure 3(a) shows a combination of inputs $x_0$, ..., $x_3$ with weight coefficients $\Theta$ and non-linear activation function g(), and Figure 3(b) is a schematic diagram showing layers of interconnected activations and weights, forming an artificial neural network. Convolutional layers extend the example of Figure 3(b) to multiple dimensions, by performing convolution operations between multidimensional filters of fixed kernel size ($k \times k$) with learnable weights and the inputs to the layer. Each activation in the output of the convolutional layer only has local (not global) connectivity to a local region of the input. The connectivity of the cascade of convolutional layers and activation functions can also include skip connections. Figure 3(c) depicts schematically the back-propagation of errors $\delta$ from coefficient $\alpha_j$ of an intermediate layer to the previous intermediate layer using gradient descent.

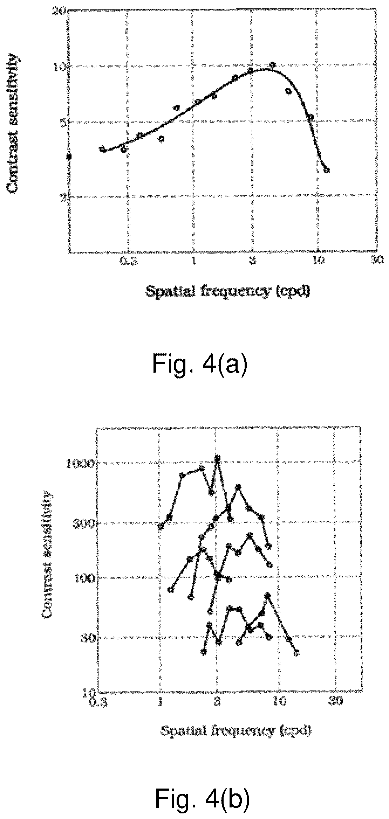

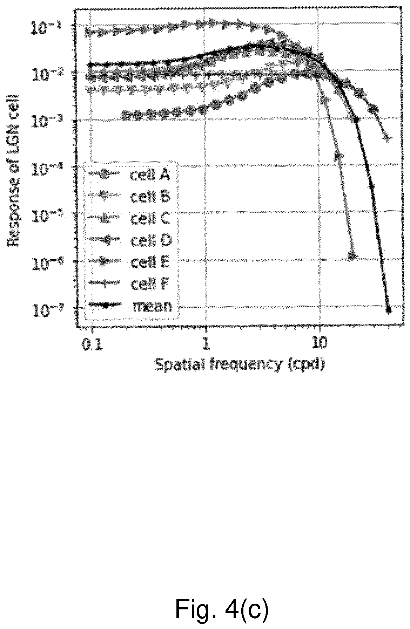

In the lateral geniculate nucleus, the contrast response functions vary between the parvocellular and magnocellular pathways. In general, the magnocellular pathway is more sensitive to stimulus contrast. The neuron receptive fields in the visual streams have a centre-surround organization; in the case of an on-centre off-surround receptive field, the centre is excited by the light source whereas the surround is inhibited. The result of centre-surround organization is that the sensitivity of neurons to contrast is a function of spatial frequency. A typical contrast sensitivity function of a neuron in the parvocellular layers of a monkey lateral geniculate nucleus is shown in Figure 4(a). Figure 4(c) shows the response of several individual lateral geniculate nucleus cells, as well as their mean response.

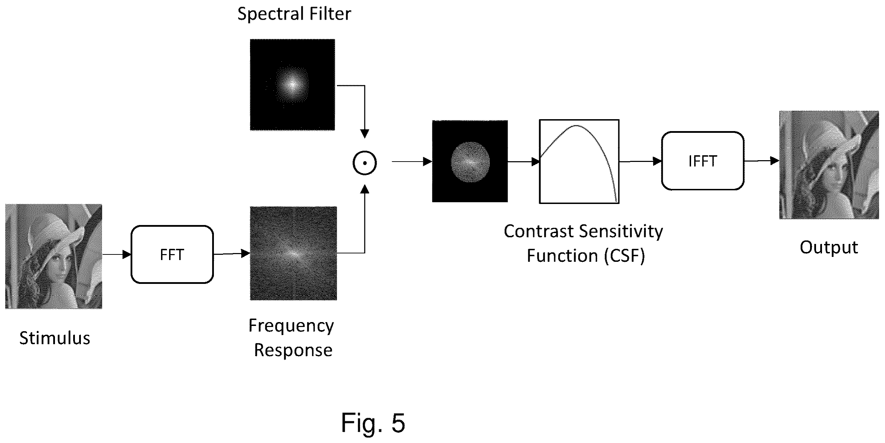

The second stage 3 uses contrast weighting to model this difference, by mapping neurons in the CNN with a contrast sensitivity function approximation. Figure 5 is a schematic diagram of a contrast sensitivity function in accordance with embodiments. The contrast sensitivity function is a simple mapping of inhibited spatial frequencies in the spectral domain, via a spectral representation of the stimulus response:

$$y = Re(F^{-1}(CSF(F(x) \odot F(w)))$$

where $F(.)$ represents the (Fast) Fourier transform (without output in cycles per degree) applied to the whole image or subregions thereof, $F^{-1}(.)$ is the inverse Fourier transform, $\odot$ represents the element-wise product, $Re(.)$ takes the real component of the transform, $x$ is a stimulus and $w$ is the filter weights in the spatial domain. The function can be applied directly on the transformed output activations of the neural network. The contrast sensitivity function can be extended from the spatial domain only (as shown in Figure 5) to the spatio-temporal domain. As the contrast sensitivity function is itself a function of the mean luminance, in embodiments the model can also couple the mapping with a mean luminance normalization.

At the next step 1040 of the method, the output of the artificial neural network system of the second stage 3 is processed by a third stage 4 of the model 1. The third stage 4 models the processing of signals from the human eye by the human visual cortex.

In the human visual system, the outputs of the retinal visual streams are passed as inputs to area V1 of the primary visual cortex. Importantly, the axons of the magnocellular and parvocellular pathways terminate in the layers 4C$\alpha$ and 4C$\beta$ in V1. The magnocellular stream makes a connection to layer 4B in V1 and the median temporal (MT) area, which is responsible for motion perception. Another branch of the magnocellular stream fuses with the parvocellular stream in superficial layers of V1.

The third stage 4 takes as input the output of the second stage 3, and models the same flow of visual streams in V1. In Figure 1, the fusion of streams is represented by a block which can represent a linear or non-linear mapping of the concatenated or summed streams via a CNN.

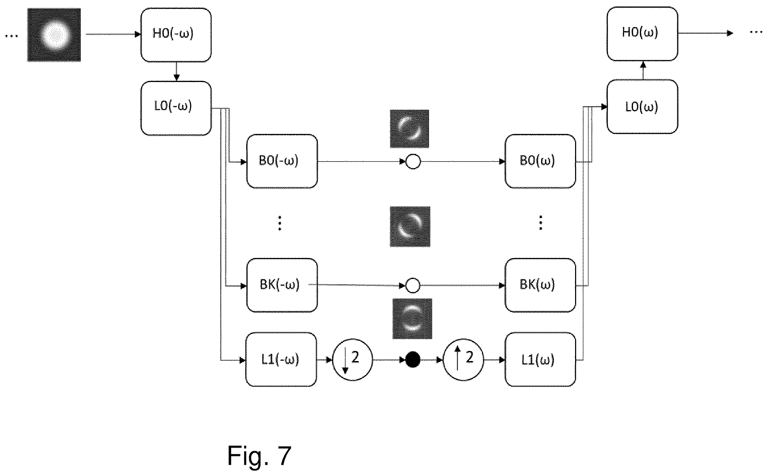

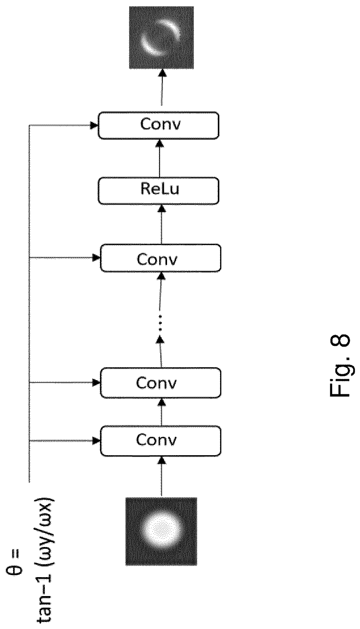

Cortical neurons exhibit sensitivity to orientation and spatial frequency. The aggregate of circularly symmetric simple cell receptive fields of neighbouring neurons can result in receptive fields that are selective to a particular orientation. The degree of orientation selectivity is a function of the number of neurons. Orientation selectivity also extends to non-linear complex cells. Both orientation and frequency selectivity can be modelled using a multi-scale pyramid representation of the input, such as a steerable pyramid, which decomposes the input into a band-pass filter bank, as discussed in Simoncelli, Eero P., and William T. Freeman. "The steerable pyramid: A flexible architecture for multi-scale derivative computation." Proceedings, International Conference on Image Processing. Vol. 3. IEEE, 1995. Figure 7 shows a schematic diagram of a steerable pyramid architecture. The model 1 uses a steerable pyramid for modelling orientation selectivity or otherwise extend to a learnable representation, by representing steerable pyramids in the context of CNNs, or in particular steerable CNNs, where the filter weights can be trained by back-propagation. The extension of the model for orientation $\theta$ is shown in Figure 8.

Cortical neurons are also sensitive to contrast. The spatial frequency selectivity of simple cells in area V1 of a monkey is shown in Figure 4(b). While not necessarily representative for more complex stimuli, it can be noted that the cortical neuron responses are more concentrated than the equivalent response of retinal ganglion cells (e.g. Figure 4(a)). Nevertheless, the frequency selectivity can be applied in embodiments using the contrast sensitivity function of Figure 5 or equivalent.

Both retinal and cortical neurons are subject to local contrast gain control via normalization over pooled responses. Essentially, each neuron's response is divided by factor representing the aggregate response over neurons in the neighbourhood. The model for this contrast gain control is known in the art as "divisive normalization". An example form for divisive normalization is:

$$y_i = \gamma \frac{x_i^{\alpha}}{\beta^{\alpha} + \sum_j x_j^{\alpha}}$$

where $x_i$ represents the neuron responses, $\{\alpha, \beta, \gamma\}$ are parameters that can be fixed or learned by training with backpropagation, $j$ is an index that runs over neighbouring responses and $y_i$ are the normalized responses, discussed in Carandini, Matteo, and David J. Heeger. "Normalization as a canonical neural computation." Nature Reviews Neuroscience 13.1 (2012): 51-62. A recently proposed generalized variant of divisive normalization is:

$$y_i = \frac{x_i}{\left(\beta_i + \sum_j \gamma_{ij} x_j^{\alpha_{ij}}\right)^{\varepsilon_i}}$$

where $\varepsilon$ is an additional parameter to set or learn, discussed in Ballé, Johannes, Valero Laparra, and Eero P. Simoncelli. "Density modeling of images using a generalized normalization transformation." arXiv preprint arXiv:1511.06281 (2015). In the CNN of the third stage 4, divisive normalization can be applied to the channels per layer, the spatial dimensions, or both.

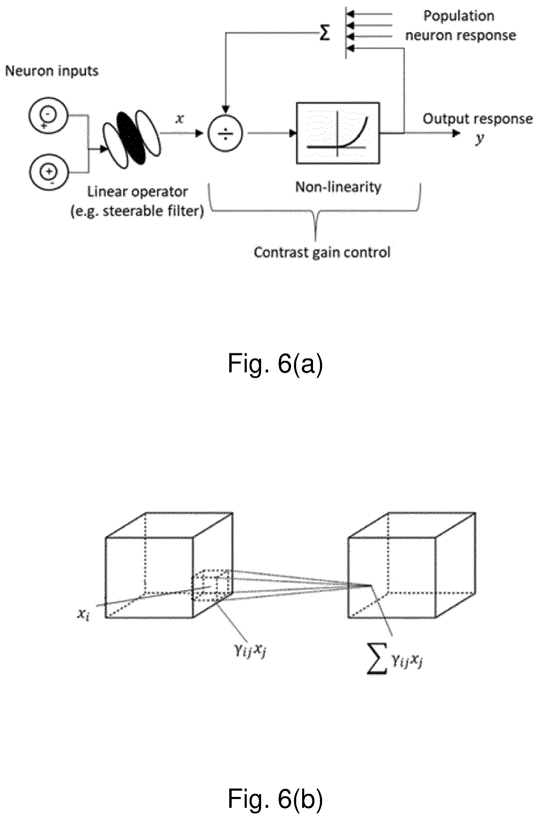

Divisive normalization can be implemented in embodiments as a convolution or other equivalent operation. Figure 6(a) is a schematic diagram of contrast gain control via divisive normalization, with Figure 6(b) showing how the pooled response element of divisive normalization can be implemented with a 3D convolution over a local neighbourhood of channels and spatial dimensions.

In the final step 1050 of the method, the output of the third stage 4 is mapped to a perceptual quality score by a mapping component 5. The output of the third stage 4 is a cortex representation of the image, i.e. a representation of the result of the processing of the image data by the human visual cortex (following processing by earlier stages). The mapping component 5 maps this cortex representation to a perceptual quality score, to give the desired output of the model 1. In embodiments, the mapping component 5 does the mapping using linear methods such as support vector regression or non-linear methods such as a multi-layer perceptron (MLP), for example.

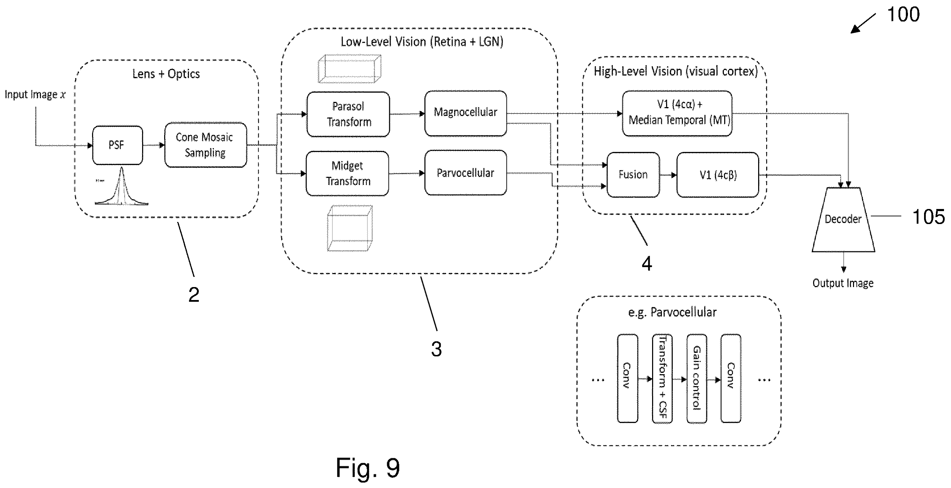

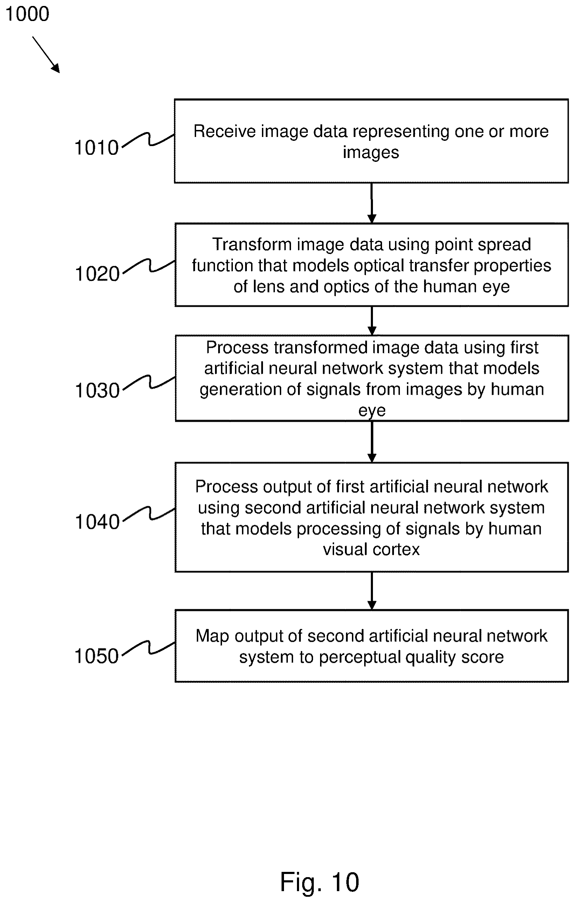

Figure 9 is a model 100 of the human visual system in accordance with other embodiments, which receives image data and generates output image data. Figure 10 is a corresponding flowchart of a method 1100 for using the model 100 to process image data to generate output image data, in accordance with embodiments.

The model 100 has the same first stage 2, second stage 3 and third stage 4 as the model 1 of Figure 1. However, instead of a mapping component 5 that receives the output of the third stage 4, the model 100 has a decoder 105 that converts the output of the third stage 4 to output image data (i.e. a pixel representation of images). In addition, as discussed below the artificial neural network systems of the model 100 will have been trained differently from those of the model 1, in particular because the training will have involved the decoder 105 instead of the mapping component 5.

Similarly to method 1000 of Figure 2, the method 1100 may be performed by a computing device, and may be performed at least in part by hardware and/or software. At step 1110 image data representing one or more images is received, and at step 1120 the received image data is transformed using the point spread function of the first stage 2 of the model 1. At step 1130 the transformed image data output by the first stage 2 is processed using the artificial neural network system of the second stage 3 of the model 1, and at step 1140 the output of the artificial neural network system of the second stage 3 is processed using the artificial neural network system of the third stage 4 of the model 1.

However, unlike method 1000, at step 1150 the output of the artificial neural network system of the third stage 4 is decoded to give output image data, i.e. a pixel representation of images, using the decoder 105. The decoder 105 can use non-linear mapping, such as a CNN, or linear mapping, such as a simple summation over representations, for example.

In embodiments, the output image data can be passed to a compressor to provide compressed image data. In other embodiments, the output image data can be passed to an encoder to provide an encoded bitstream. In other embodiments, the output image data can be processed in other ways for other applications. As discussed below, the model 100 can be trained so that result of the compressing, encoding or the like of the output image data gives an improved result.

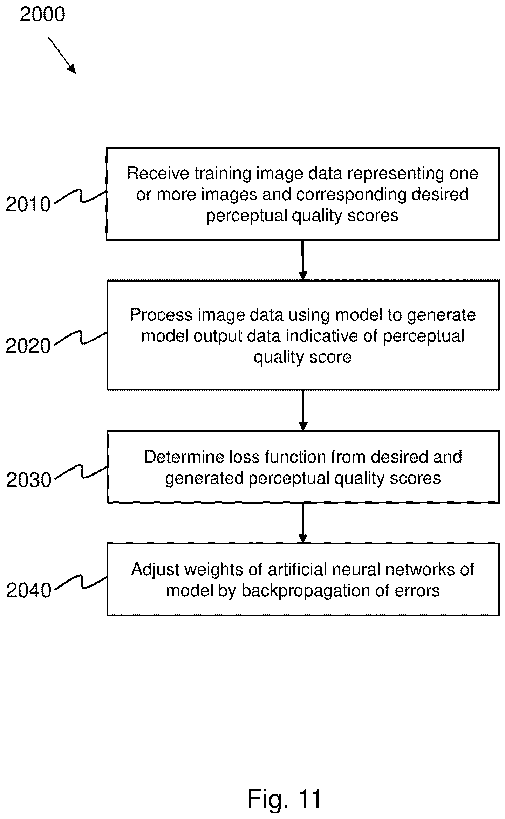

Figure 11 is a flowchart of a method 2000 for training the model 1, in accordance with embodiments. Again, the method 2000 may be performed by a computing device, according to embodiments, and may be performed at least in part by hardware and/or software.

At the first step 2010, training data is received, which comprises image data and corresponding desired perceptual quality scores for the image data, for example human-derived quality scores.

At the next step 2020, the image data is processed by the model 1 to generate model output data, i.e. a perceptual quality score generated by the model 1 based on the processing of the image data by the various functions and neural networks of the model 1.

At the next step 2030, a loss function is determined from the desired and generated perceptual quality scores. In embodiments the loss function can be the total variation distance between the distribution of the desired and generated perceptual quality scores, or other measure of distance between distributions, for example.

At the next step 2040, the weights of the artificial neural networks of the model 1 are adjusted using the loss function, by backpropagation of errors using gradient descent methods. The whole model 1, i.e. the composition of all its component parts, can be trained end-to-end with backpropagation from generated perceptual quality scores back to the input pixels (image data), as each component part of the model 1 uses only differentiable functions.

A method of training the model 2 of Figure 9 in accordance with embodiments is similar, with the only difference being the determination of the loss function or loss functions. For video coding, the loss function can be an aggregate over multiple loss components that represent fidelity between input and output representations, such as mean squared error or mutual information. This can be performed in the image (pixel) space or (cortical) representation space. The weighting and combination of fidelity loss functions comprises a linear function $D$ of the type $c_1 s_1 + c_2 s_2 + \cdots +$, where $c_1, \ldots, c_N$ are the weights and $s_1, \ldots, s_N$ are the loss functions. Other example loss functions comprise non-linear combinations of these scores using logarithmic, harmonic, exponential, and other nonlinear functions. This is coupled with a rate loss function $R$, such that $D + \lambda R$, where $\lambda$ controls the trade-off between rate and distortion. The rate is modelled using an entropy coding component, which can be a continuous differentiable approximation of theoretical (ideal) entropy over transform values, or continuous differentiable representation of a Huffman encoder, an arithmetic encoder, a run-length encoder, or any combination of those that is also made to be context adaptive, i.e., looking at quantization symbol types and surrounding values (context conditioning) in order to utilize the appropriate probability model and compression method.

In this way, the model 2 can be trained so that the output image data gives an improved result when compressed, encoded or the like, for example image data that is compressed or encoded more efficiently or that has better perceived quality following decompression or decoding.

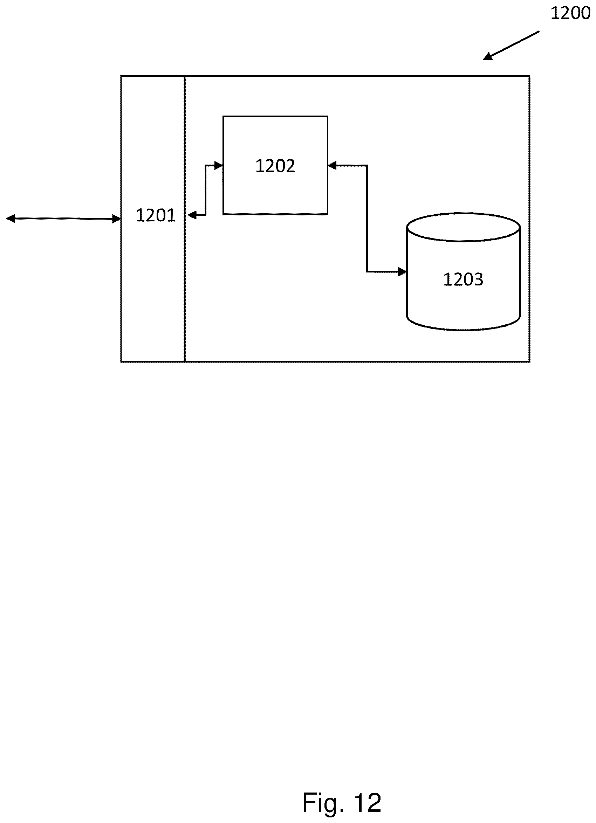

Embodiments include the methods described above performed on a computing device, such as the computing device 1200 shown in Figure 12. The computing device 1200 comprises a data interface 1201, through which data can be sent or received, for example over a network. The computing device 1200 further comprises a processor 1202 in communication with the data interface 1201, and memory 1203 in communication with the processor 1202. In this way, the computing device 1200 can receive data, such as image data or video data, via the data interface 1201, and the processor 1202 can store the received data in the memory 1203, and process it so as to perform the methods of described herein.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

**EP 4 693 163 A2**



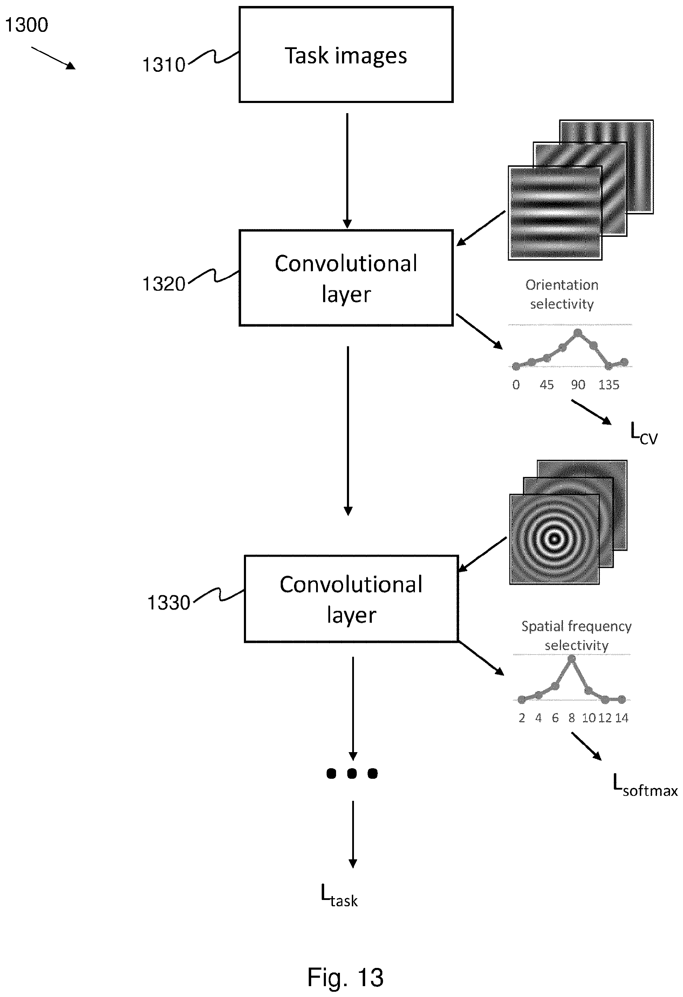

Figure 13 is a flowchart of a method 1300 in accordance with embodiments, in which psychovisual constraints are imposed in convolutional layers of an artificial neural network. With this method, instead of using neural building blocks that mimic visual system operations, any existing differentiable neural network architecture that involves convolutional layers (e.g. VGG-19, ResNet) is taken and a set of psychovisual constraints is applied during training. This causes the trained neural network to operate in accordance with aspects of the human visual system.

Here, "psychovisually constraining" refers the imposition of constraints such that the elements of the model (e.g. convolutional layers) show response properties akin to those of visual neurons in the human visual systems. This is includes, but is not limited to, selectivity to particular spatial frequencies, orientations, and/or temporal frequencies in the visual input.

At the first step 1310 an image on which the task is to be performed (e.g. classification, compression) is sent to the first layer in an artificial neural network.

At the next step 1320 the image is convolved using convolutional operations and its output is sent to the next layer. Additionally to this, a set of oriented sinusoidal gratings is convolved with the convolutional filters. The gratings may differ in orientation but also spatial frequency and phase. For each convolutional filter, the response is combined across spatial frequencies and phases, yielding one value for each orientation, a so-called orientation profile. A loss function is applied to the set of responses to quantify how sharply the filter response is focused on a specific orientation. For radial data, one such loss function is given by the circular variance:

$$L_{CV} \;=\; 1 - \frac{1}{n}\sqrt{\left(\sum_{i=1}^{n}\cos\theta i\right)^2 + \left(\sum_{i=1}^{n}\sin\theta i\right)^2}$$

where $\theta i$ is the filter response to the i-th orientation and n is the total number of probed orientations. L takes a value between 0 and 1 where 0 represents a flat orientation profile (no orientation selectivity) and 1 represents an orientation profile with a single peak (maximum orientation selectivity).

At the next step 1330 the output from the previous layer is passed through the convolutional layer. Additionally, a set of radial sinusoidal gratings are convolved with the convolutional filters. The gratings may differ in spatial frequency and phase. For each convolutional filter, the response is combined across phases, yielding one value for each probed spatial frequency. A loss function is applied to the set of responses to quantify how sharply the filter response is focused around a given spatial frequency. For non-radial data, the maximum of the softmax function can be used to this end:

$$L_{softmax} \;=\; max_i \; \frac{e^{\sigma i}}{\sum_{i=1}^{n}\sigma i}$$

where $\sigma i$ represents the filter response at the i-th spatial frequency.

The loss function for the task $L_{task}$ and the psychovisual loss functions $L_{CV}$ and $L_{softmax}$ are jointly used for the updating of the weights.

In this way, the artificial neural network can be trained show response properties akin to those of visual neurons in the human visual systems.

Further embodiments based on the human visual system model are now described. The embodiments can be based on the human visual system model or on the imposition of psychovisual constraints described above. Each embodiment involves two key components, a human visual system (HVS) encoder and an HVS decoder. Both components model the visual system but use different input/output pairs. An HVS encoder is an artificial neural network that implements an HVS model using the method 1000 or method 1300. Its input is an image or video and its output is a latent representation of the input. This latent representation can be either dense or sparse and can come with 2D or 3D spatial structure or as a 1D vector. An HVS decoder is an artificial neural network that implements an HVS model using the method 1000 or method 1300. It differs from an HVS encoder in that its input is any latent representation as in shape of the form provided by the HVS encoder. Its output is a reconstruction of the input.

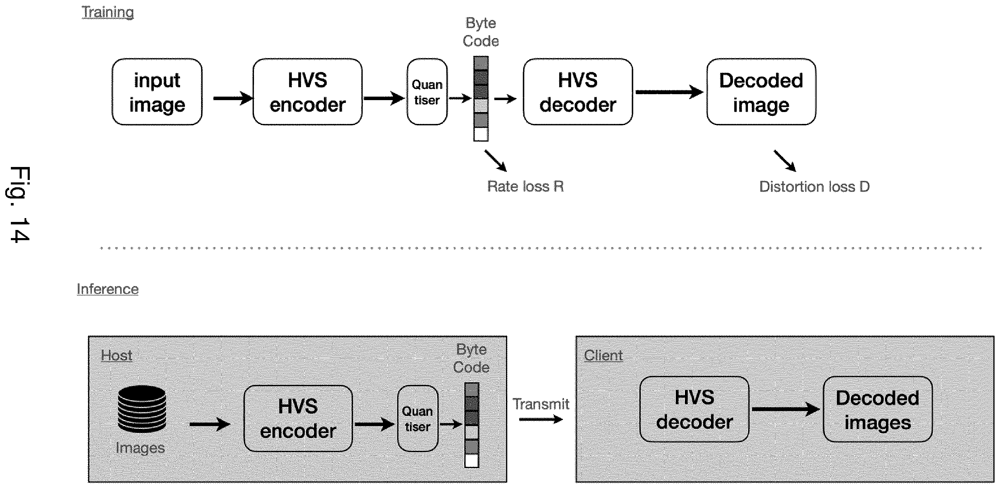

A neural compression framework implementing this HVS structure in accordance with embodiments is shown in Figure 14. The neural compression framework compresses latent representations with a neural encoder, such that they can efficiently be transmitted and transformed back to an image representation using a neural decoder. To this end, neural compression harnesses an HVS encoder to compress information into a 1D byte stream. This byte stream then passes a quantiser that translates the vector from a continuous representation to a discrete code that can be transferred via a communication device. Another device then receives the byte stream and uses an HVS decoder to reconstruct the original image or video from the encoded signal. During training, both encoder and decoder are trained on a single device in an end-to-end manner. To this end, the loss function comprises both a distortion loss D measuring the fidelity of the reconstructed image in the distortion-perception domain and a rate loss R that measures the compressibility of the quantised latent representation. The composite loss function $D + \lambda R$ uses the parameter $\lambda$ to control the trade-off between image fidelity and compressibility. As before, the rate R is modelled using an entropy coding component, which can be a continuous differentiable approximation of theoretical (ideal) entropy over transform values, or continuous differentiable representation of a Huffman encoder, an arithmetic encoder, a run-length encoder, or any combination of those that is also made to be context adaptive, i.e., looking at quantization symbol types and surrounding values (context conditioning) in order to utilize the appropriate probability model and compression method. Distortion D can be either a distortion metric that represents pair-wise differences at the pixel-level or the level of image patches (e.g. mean squared error, structural similarity index); a perceptual metric that features some awareness of human visual and aesthetic preferences e.g. by having it fit on a set of human perceptual quality metrics of images or videos; or a combination of multiple distortion and/or perceptual metrics, with additional hyperparameters determining their relative trade-off.

The encoder outputs a latent representation of the input that is then vectorised into a 1D array. It is then passed through the quantiser which transforms the numbers from a continuous representation (typically floating point numbers) to a discretised representation (typically 8-bit integer numbers). The transformation involves scaling, shifting, and rounding operations. It can either use fixed quantisation bins e.g. all integers from 0 to 255 or learnable set of bins that are optimised along with the artificial neural network weights, using either a differentiable function that is trained through backpropagation or an alternative optimisation method such as gradient-free techniques that is applied alternatingly with the weight updates of the model. Rate loss is calculated based on this vectorised, quantised version of the encoder output. The quantiser requires careful implementation not to interfere with the neural network learning. In particular, a differentiable version is required that allows for the passing of gradients from the decoder to the encoder. Since the rounding operation is not differentiable, several alternatives exist. One alternative is to use a known soft quantisation approach wherein the hard rounding operation is used for the forward pass, but a soft approximation of the quantiser's step function is used during gradient calculation. The soft approximation uses a sum of sigmoid functions fit to the quantisation steps. The steepness of the sigmoid functions can be set to control the trade-off between the approximation quality and effective non-zero gradient information that can pass through the quantiser. Alternatively, quantisation can be relaxed by using additive noise as a proxy of quantisation noise. In this scenario, the noise is added to the signal and the signal is not quantised and approximate bounds are used for the rate loss. Subsequently, the decoder uses the quantised vector to map the data back into a dense and continuous image representation.

During inference, all learned parameters i.e. weights of the encoder and decoder layers and potentially learned quantisation bins are fixed and hard quantisation is used. Typically, encoder + quantiser and decoder are deployed in a distributed fashion. A host device (e.g. server) uses the encoder to map the source image or video material to a latent representation and after quantisation it submits the byte stream via an appropriate communication channel (e.g. HTTP). On the client side (e.g. laptop, smartphone), the byte stream is received and the decoder is used to re-synthesise the image or video. Here, both host and client devices are assumed to be able to run neural architectures (e.g. using a central processing unit or mobile processing unit).

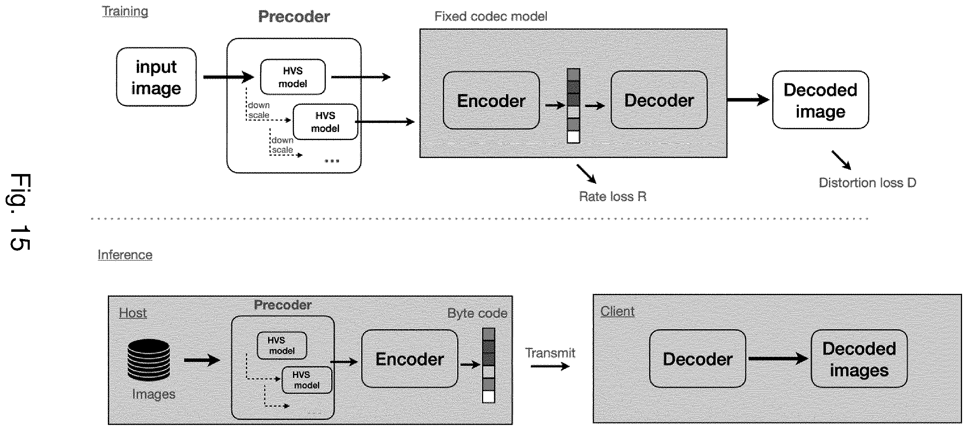

A precoder implementing the HVS structure in accordance with embodiments is shown in Figure 15. The term "precoding" refers to perceptual preprocessing prior to encoding. It is able to combine the performance of neural approaches to image and video compression with the versatility and computational efficiency of wide adopted (both geographically and across different consumer devices) of existing "hand-crafted" coding standards such as AVC and HEVC (see E. Bourtsoulatze, A. Chadha, I. Fadeev, V. Giotsas, and Y. Andreopoulos, "Deep Video Precoding", arXiv:1908.00812). Purely neural approaches, such as the end-to-end model described above, are limited by the availability of software solutions for the running of artificial neural networka on client devices and, more importantly, the computational burden of artificial neural networks in terms of relevant metrics such as frames per second and energy consumption. In contrast, precoding approaches maximise compatibility because they can be integrated into existing processes as a perceptual preprocessing component. Moreover, since the precoding is performed only on the server side, no changes at all are necessary on the client side.

The precoder consists of one or more instantiations of an HVS model. Each model takes as input an image and returns as output its precoded version. In doing so, the main goal of the precoder is to add redundancy into the image that can then be exploited by the codec to improve compression rates, ideally at little or no expense in terms of quality of the decoded image. Typically, redundancy increases are obtained by removing imperceptible details from the image. Adaptive streaming systems often require the availability of data at different spatial resolutions. Therefore, the precoder may include multiple instantiations of an HVS model that take as input images at different spatial scales (i.e. after downsampling operations); alternatively the HVS model itself include a neural downscaling operation. The output is thus one image or a set of images at different spatial scales. It is passed on to a fixed codec model (e.g. AVC, HEVC) that consists of an encoder and a decoder. The encoder translates the input into a latent representation, performs additional steps (e.g., motion compensation, intra- and intra-frame coding for videos), and then quantises and vectorises it and encodes the vector using an entropy coding technique. The decoder inverts this process by recovering the image from the byte code.

For training, the precoder is the only component that requires weight updates. The precoder tries to work in tandem with the codec in that it provides input that is maximally compressible while preserving image fidelity. To this end, training is based on the composite loss function $D + \lambda R$ that uses the parameter $\lambda$ to control the trade-off between distortion loss D and rate loss R. As before, the rate R is modelled using an entropy coding component, which can be a continuous differentiable approximation of theoretical (ideal) entropy over transform values, or continuous differentiable representation of a Huffman encoder, an arithmetic encoder, a run-length encoder, or any combination of those that is also made to be context adaptive, i.e., looking at quantization symbol types and surrounding values (context conditioning) in order to utilize the appropriate probability model and compression method. Distortion D can be either a distortion metric that represents pair-wise differences at the pixel-level or the level of image patches (e.g. mean squared error, structural similarity index); a perceptual metric that features some awareness of human visual and aesthetic preferences e.g. by having it fit on a set of human perceptual quality metrics of images or videos; or a combination of multiple distortion and/or perceptual metrics, with additional hyperparameters determining their relative trade-off.

Both loss terms are calculated after the encoding step. Hence, for gradient-based weight updates, differentiability of the precoder alone is not sufficient, the codec needs to be differentiable as well. This can be realised by training a virtual codec beforehand, that is, a differentiable approximation to an existing codec standard involves encoders and decoders based on artificial neural networks and differentiable estimates of the rate. Such a virtual codec can then be trained to mimic an existing codec by providing triplets of source/encoded/decoded images. Once training is finished, the weights can be fixed and the virtual codec is used to implement the precoding framework. The precoder's weights can then be updated with respect to the loss terms.

During inference, all learned parameters including weights in the convolutional layers are fixed. A host device (e.g. server) uses the conjunction or precoder and encoder to map the source image or video material to a latent representation and after quantisation it submits the byte stream via an appropriate communication channel (e.g. HTTP). On the client side (e.g. laptop, smartphone), the byte stream is received and the decoder is used to re-synthesise the image or video. Here, only the host device needs to be able to run neural architectures. Alternatively, the precoding can be performed on a separate device asynchronously with the encoding. For instance, precoded images can be saved in a database. Then, an existing codec pipeline can be used, the only difference from normal operation being that the codec is provided with precoded images rather than source images.

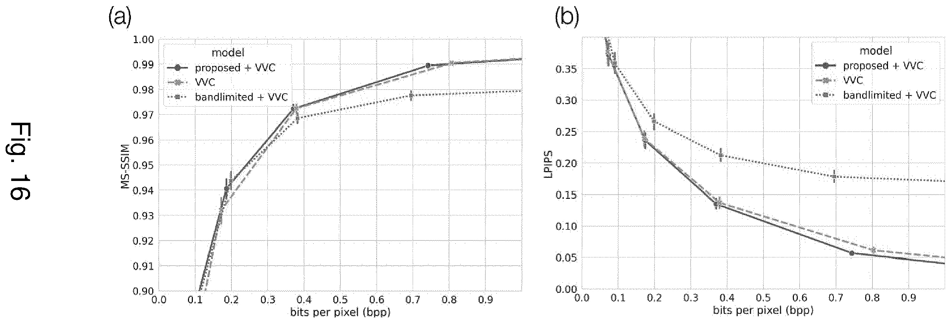

Results for a concrete realisation of the embodiment are shown in Figure 16. The HVS model is applied as a perceptual preprocessor in an image encoding experiment using the state-of-the art Versatile Video Coding (VVC) standard in its still-image encoding mode. VVC is considered a successor to the industry-standard High Efficiency Video Coding (HEVC), and significantly outperforms it on a number of lossy compression benchmarks. As such, the application domain of precoding forms a good proving ground for an HVS model that induces sparsity in the frequency domain, as this is expected to lead to reduced encoding bitrate without sacrificing perceptual quality when compared to just encoding the original input image. Training and evaluation was performed on the Challenge on Learned Image Compression (CLIC) dataset. The dataset contains a mix of 2,163 professional and mobile images split into 1,633 training images, 102 validation images and 428 test images. All images were transformed into YUV format and training was performed on the luminance channel only, by randomly extracting crops of size 256 x 256. The concrete implementation of the model was composed of four sequential FFT blocks, where each individual FFT block was configured as in Figure 5. Each block comprised a kernel y of size of 15x15, with K=16 output channels in each layer apart from the last, which was used for a transformation back to a pixel domain representation. Larger kernel sizes are computationally more viable with spectral domain multiplication than spatial domain convolution, and help to increase the model capacity when using less blocks.

Each kernel in the spectral domain, $F_y^k$, $k \in [1, K]$, was assigned a separate contrast sensitivity function (CSF) map, $G^k(.; f_{max}^k, \beta_k, \delta_k)$ and soft threshold for activation. The CSF parameters were randomly initialized from a uniform distribution within the ranges $f_{max} \in [1,10]$, $\beta \in [2,6]$, $\delta \in [0.05,0.5]$ and restricted to these ranges during training with a clipping constraint. The peak sensitivity $\gamma_{max}$ was fixed to 200, given that the CSFs are rescaled to the range [0, 1]. All soft thresholds were initialized to the same values from the list [-13, -11, -9, -7], where each index in the list represents an FFT block. This adds a sparsity bias towards the last layer, where more sparsity directly translates to more compression under the preprocessing setting.

Two versions of the model were trained, a distortion-oriented model (DO) and a perceptually-oriented model (PO), which represent different trade-offs in the distortion-perception continuum. Defining x as the input image and the output of the model as $\hat{x}$, the joint loss function combining fidelity losses and sparsity loss is given by

$$L(x, \hat{x}) = \|x - \hat{x}\|_1 + \alpha L_{MS-SSIM}(x, \hat{x}) + \eta L_{LPIPS}(x, \hat{x}) + \lambda \sum_{i=1}^{4} L_{sparse}^{(i)}$$

where i represents the FFT block index. For the DO model, $\alpha \gg \eta$, which provides a substantially larger weight on the more distortion oriented MS-SSIM loss. Conversely, for the PO model, $\eta \gg \alpha$, which gives the more perceptually oriented LPIPS a higher weighting.

LPIPS measures distance between images in a deep feature space and therefore lies closer to perception than MS-SSIM on the perception-distortion plane. For both models, training was performed with Mean Absolute Error (MAE) to ensure the output was representative of the source and a sparsity loss loss $L_{sparse}^{(i)}$ on each FFT blocks to zero out activations. In order to traverse the rate-distortion space, each model was trained with varying $\lambda \in [5 \cdot 10^{-9}, 5 \cdot 10^{-8}]$ and plotted the convex hull over varying $\lambda$. The precoding approach outperformed VVC alone in terms of MS-SSIM and LPIPS. It also outperformed an alternative model ('bandlimited') that performs band limitation in the Fourier spectrum (Dziedzic, A., Paparrizos, J., Krishnan, S., Elmore, A., & Franklin, M. (2019). Band-limited Training and Inference for Convolutional Neural Networks. PMLR. https://developer.nvidia.com/cudnn).

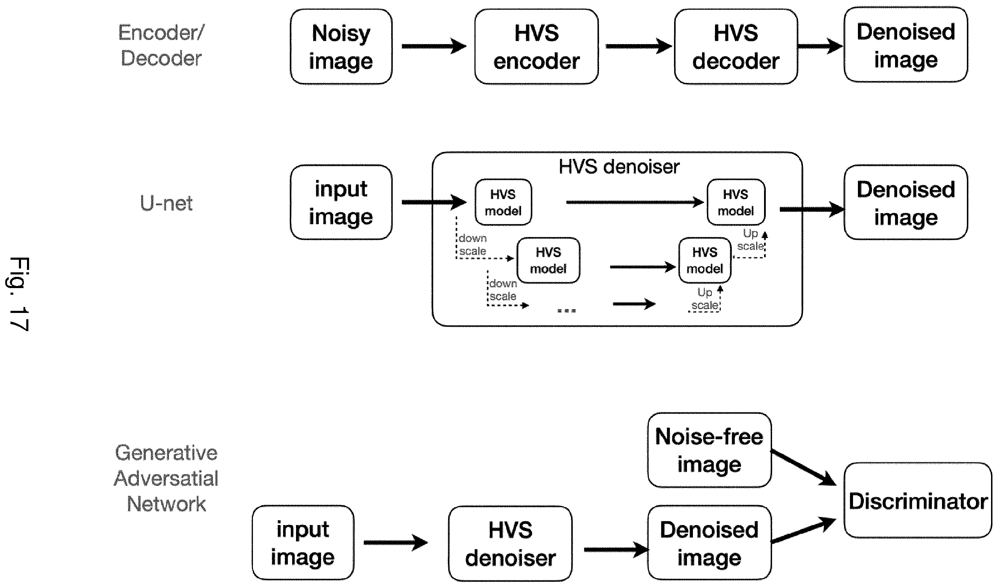

A denoiser implementing the HVS structure in accordance with embodiments is shown in Figure 17. The aim of denoising is the reconstruction of a pristine image (or as close as is possible) from a version has been subject to corruption. The corruption of an image may have various sources, for instance, sensor noise, damage or wear-off for image that were stored in an analogue fashion, upscaling artifacts from upscalers, quantisation artifacts, and other artifacts stemming from lossy compression and/or transmission of the image. The different corruptions pertain to different categories of noise (Li, S., Zhang, F., Ma, L., & Ngan, K. N. (2011). Image quality assessment by separately evaluating detail losses and additive impairments. IEEE Transactions on Multimedia, 13(5), 935-949. https://doi.org/10.1109/TMM.2011.2152382). Noise relating to detail loss refers to the removal of information from the image, for instance rendering letters on a number plate unreadable. Other corruptions correspond to additive impairments that can stem from the operation of a compression algorithm or video codec. Common examples are blocking artifacts related to the partitioning of the image into analysis blocks and checkerboard patterns following the removal of coefficient from the Discrete Cosine Transform. In light of true information loss, perfect reconstruction of an image via a denoising algorithm is not possible. Instead, denoising algorithms operate under a regime that involves both image enhancement (denoising patterns that are still present in the image but corrupted) and perceptual imputation ('hallucinating' information that makes the image look more natural). The former operation reduces the image distortion whereas the latter improves perceptual quality. Optimising both quantities requires a perception-distortion trade-off. An HVS model allows for a better navigation of the trade-off: information that is not perceptually relevant is attenuated or removed whereas perceptually relevant information is highlighted and amplified. Ideally, such a model can better generate a restored image that is not equal to the original (noise-free) image but that differs only in those aspects that are imperceptible to a human observer, making the denoising appear perceptually immaculate.

In embodiments, such a denoising system is realised by feeding the image into an HVS-based denoiser which outputs the denoised image. A combination of a distortion loss D (e.g. MSE) and a perceptual loss P (e.g. LPIPS) can be used to quantify the quality of the restored image. By using a differentiable loss function, the model can be trained end-to-end using gradient-based optimisation. The loss function is then given by $D + \lambda P$ where $\lambda$ is a hyperparameter controlling the perception-distortion trade-off. The denoiser can be implemented using different instantiations of an HVS model:

- *Encoder/decoder.* The noisy input image passes through an HVS encoder as described above. The encoder output is an intermediate, lower-resolution representation of the input that has a smaller spatial extent (e.g. via max-pooling layers) but a larger number of channels. The encoder transforms the image into a representation that features both spatial and semantic aspects. The decoder then aims to reconstruct the full-resolution input using an HVS model including upscaling operations. This model is particularly suited for denoising of high-spatial frequency noise such as in "salt and pepper" noise or sharp edges from blocking artifacts, since the downscaling operations involved in the encoder naturally attenuate high frequencies. Optionally, a feature matching loss term can be added to provide additional gradients for the training procedure. The feature matching loss term enforces that the latent representation of the encoder corresponds to the latent representation of the noise-free image. Let x and y be the noise and noise-free input images, respectively, and enc be the encoder operation, then feature matching loss can be defined as $\|enc(x) - enc(y)\|_2$, that is, the L2 distance between the latent representations.

- *U-net.* A simple encoder/decoder structure can suffer from an inability to recover fine detail during denoising. This can partially be attributed to the loss of fine spatial information during downscaling. U-nets augment an encoder/decoder architecture with additional skip connections. Instead of the input image taking a single route through the model involving several downscaling operations followed by upscaling operations, the information flow branches off at each downscaling stage: For each resolution level in the encoder, the resultant output of the layer is downscaled and passed on (like in an ordinary encoder/decoder setup) but also relayed directly to the corresponding resolution level in the decoder. Conversely, at each resolution level in the decoder, a layer has inputs from both lower resolution decoding layers as well as the corresponding input from the encoder.

- *Generative Adversarial Network (GAN).* Both encoder/decoder architectures and U-nets can produce perceptually suboptimal results when the information loss in the noisy image is substantial and recovery of high spatial frequency information from the input is not possible. In this case, high perceptual quality and plausibility can only be obtained when the model guesses or 'hallucinates' details that it cannot infer directly from the input but that have to be present in order to make the image look more natural. In other words, the aim is to perform a mapping of the restored image onto the natural image manifold. This can be realised by extending the model into a GAN. In GANs, two artificial neural networks are pitted against each other in a two-player minimax game (Goodfellow, I. J., Pouget-Abadie, J., Mirza, M., Xu, B., Warde-Farley, D., Ozair, S., Courville, A., & Bengio, Y. (2014). Generative Adversarial Nets. Advances in Neural Information Processing Systems 27 (pp. 2672--2680). Curran Associates, Inc. http://arxiv.org/abs/1406.2661). Here, an encoder/decoder architecture or a U-net can be used as the (conditional) generator component of the GAN, conditioned on the noisy input image. The discriminator can be a standard convolutional neural network that takes as input an image and outputs the probability that the image is real rather than produced by the generator. Such a discriminator provides an additional feedback signal to the generator that often leads to an improvement in perceptual quality. Let g be the generator and f the discriminator and x and y the noisy and noise-free images, respectively, then the GAN loss signal is given by $L_{GAN} = log\ f(y) + log(1 - f(g(x)))$. The generator tries to minimise the loss whereas the discriminator tries to maximise it. Generator and discriminator are training in an alternating fashion. During generator training, the GAN loss can be integrated with the distortion and perceptual loss terms yielding $D + \lambda P + \mu L_{GAN}$ where $\mu$ is another hyperparameter controlling the trade-off between GAN loss and image fidelity loss.

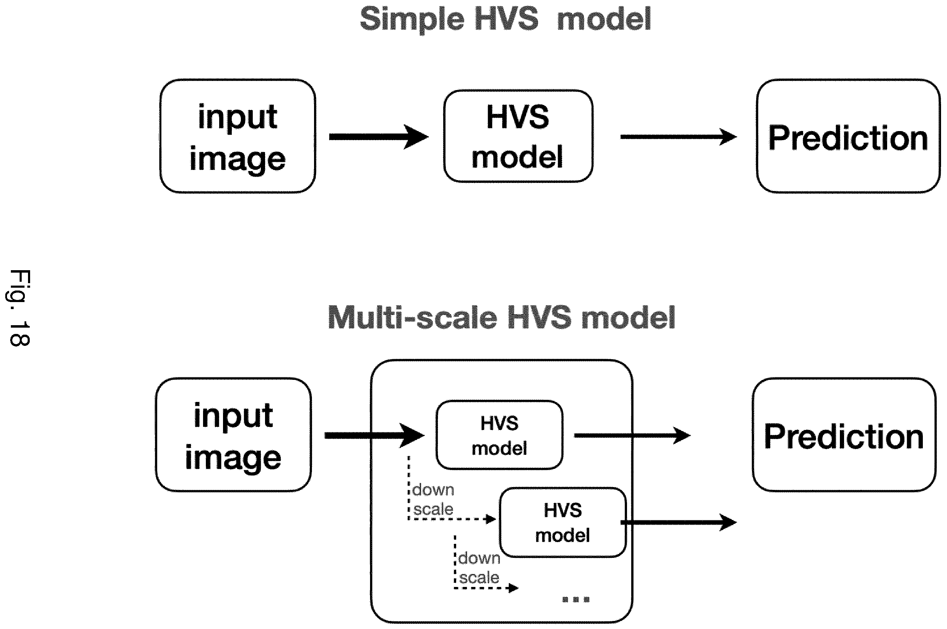

An image or video classifier implementing the HVS structure in accordance with embodiments is shown in Figure 18. The model can perform classification (e.g. human vs non-human) or regression tasks (e.g. predict age of person). The main feature of the model compared to standard CNNs is its higher adversarial robustness. In standard models, small changes to an input image that are imperceptible to a human observer can lead to grave changes in the models response. This has been taken as evidence that the operation of computer vision systems based on convolutional neural networks - despite the obvious analogies with the human visual system - is quite unlike the way human vision operates. Adversarial attacks of this sort are not a mere academic peculiarity but can have grave consequences. For instance, imperceptible manipulations medical images can lead to different diagnostic outcomes and computer vision systems in self-driving cars have been shown to be sensitive to the placement of colorised patches. In both cases, human visual assessment is not affected although algorithmic outputs are. An HVS based system can alleviate this by explicitly modelling the information flow through the artificial neural network in a way akin to human vision. Since the imperceptible manipulations often appear as low amplitude, high frequency noise, the modelling of the CSF alone (as in Figures 4a and 4b) will make the models more robust. It will focus the sensitivity of the system to spatial frequencies that the human visual system is sensitive to and decrease the sensitivity to high frequency manipulations.

In embodiments, the input image is fed into a HVS model. The model consists of one or more simple instantiations of an HVS model. Alternatively, it is a multi-scale model with intermittent downscaling operations using strided convolutions, max pooling or average pooling. The output is a prediction of a class or class probability via a tanh or softmax layer (classification) or a numerical prediction (regression). As loss function, cross-entropy loss can be used for classification whereas mean absolute error or mean squared error can be used for regression.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

Clauses

The disclosure may be further understood with reference to the following clauses.

Clause 1. A computer-implemented method of processing image data using a model of the human visual system, the model comprising:

a first artificial neural network system trained to generate the first output data using one or more differentiable functions configured to model the generation of signals from images by the human eye; and
a second artificial neural network system trained to generate the second output data using one or more differentiable functions configured to model the processing of signals from the human eye by the human visual cortex;

the method comprising:

receiving image data representing one or more images;

processing the received image data using the first artificial neural network system to generate first output data;

processing the first output data using a second artificial neural network system to generate second output data;

determining model output data from the second output data; and

outputting the model output data for use in an image processing process.

Clause 2. A method according to clause 1, further comprising the step, prior to the first artificial neural network system processing the received image data, of transforming the received image data using a function configured to model the optical transfer properties of lens and optics of the human eye.

Clause 3. A method according to clause 2, wherein the function is a point spread function configured to model the diffraction of light in the human eye when subject to a point source.

Clause 4. A method according to any preceding clause, wherein the one or more differentiable functions used to train the first artificial neural network system are configured to model the behaviour of the retina of the human eye.

Clause 5. A method according to any preceding clause, wherein the one or more differentiable functions used to train the first artificial neural network system are configured to model the behaviour of the lateral geniculate nucleus.

Clause 6. A method according to any preceding clause, wherein the first artificial neural system is trained using one or more contrast sensitivity functions.

Clause 7. A method according to any preceding clause, wherein the second artificial neural network system is a steerable convolutional neural network.

Clause 8. A method according to any preceding clause, wherein the model output data comprises a perceptual quality score for the image data.

Clause 9. A method according to any preceding clause, wherein the model output data is image data.

Clause 10. A method according to clause 9, further comprising the step of encoding the model output data using an image encoder to generate an encoded bitstream.

Clause 11. A computer-implemented method of training a model of the human visual system, wherein the model comprises:

a first artificial neural network comprising a set of interconnected adjustable weights, and arranged to generate first output data from received image data using one or more differentiable functions configured to model the generation of signals from images by the human eye; and

a second artificial neural network comprising a set of interconnected adjustable weights, and arranged to generate second output data from first output data using one or more differentiable functions configured to model the processing of signals from the human eye by the human visual cortex;

the method comprising:

receiving image data representing one or more images;

processing the received image data using the first artificial neural network to generate first output data;

processing the first output data using the second artificial neural network to generate second output data;

deriving model output data from the second output data;

determining one or more loss functions based on the model output data; and

adjusting the weights of the first and second artificial neural networks based on back-propagation of values of the one or more loss functions.

Clause 12. A computer-implemented method of training an artificial neural network, wherein the artificial neural network comprises a set of one or more convolutional layers of interconnected adjustable weights, and is arranged to generate first output data from received image data using one or more differentiable functions, the method comprising:

receiving image data representing one or more images;

processing the received image data using the artificial neural network to generate output data;

determining one or more output loss functions based on the output data;

determining one or more selectivity loss functions based on the selectivity of one or more layers of the set of convolutional layers of interconnected adjustable weights; and

adjusting the weights of the artificial neural network based on back-propagation of values of the one or more output loss functions and one or more selectivity loss functions.

Clause 13. A method according to clause 12, wherein the one or more selectivity loss functions are based on the selectivity of the one or more layers to spatial frequencies and/or orientations and/or temporal frequencies in the received image data.

Clause 14. A computing device comprising:

a processor; and
memory;
wherein the computing device is arranged to perform, using the processor, a method according to any of clauses 1 to 13.

Clause 15. A computer program product arranged, when executed on a computing device comprising a processor or memory, to perform a method according to any of clauses 1 to 13.

**Claims**

1. A computer-implemented method comprising:

obtaining an input image;
processing the input image using a set of two or more human visual system, HVS, models, wherein each HVS model in the set processes a respective downsampled input image that has a different spatial scale to generate a respective precoded output;
processing the respective precoded outputs of the set of HVS models using an encoder model to generate a bitstream; and
transmitting the bitstream to a user device having a decoder model compatible with the encoder model.

2. The computer-implemented method of claim 1, wherein each HVS model in the set of HVS models has been trained through operations comprising:

obtaining decoded output data comprising an output image generated by decoding the bitstream for each of a set of training image inputs using the decoder model compatible with the encoder model;
determining one or more loss functions using the bitstream and the decoded output data for each of the set of training image inputs; and
updating one or more values of a set of weights of the HVS model in accordance with the one or more loss functions.

3. The computer-implemented method of claim 2, wherein determining one or more loss functions comprises, for each training input image:

determining, using the bitstream for the training input image, a rate loss modelled using an entropy coding component; and
determining, using the output image generated for the training input image, a distortion loss that represents differences between the training input image and the output image.

4. The computer-implemented method of claim 3, wherein the distortion loss characterizes differences using a set of human perceptual quality metrics.

5. The computer-implemented method of claim 1, wherein the encoder model and the decoder model compatible with the encoder model are a fixed codec model.

6. The computer-implemented method of claim 1, wherein the encoder model and the decoder model compatible with the encoder model are a differentiable virtual codec model.

7. The computer-implemented method of claim 1, wherein each HVS model in the set of two or more HVS models comprises a neural downscaling layer, and the method further comprising:
downsampling, using the neural downscaling layer of each HVS model, the input image to generate the respective downsampled input images.

8. The computer-implemented method of claim 1, wherein generating the respective precoded outputs comprises generating the respective precoded outputs at a first server, and wherein generating the bitstream comprises generating the bitstream at a second server.

9. The computer-implemented method of claim 1, wherein each HVS model in the set of two or more HVS models comprises two streams of convolutional neural networks (CNNs), each stream having a respective contrast sensitivity function.

10. The computer-implemented method of claim 9, wherein the respective contrast sensitivity functions correspond to respective neural pathways of a human eye.

11. The computer-implemented method of claim 9, wherein:

a first stream of CNNs comprises first convolutional filter weights modified by a first contrast sensitivity function **characterized by** sensitivity to low spatial frequency and high temporal frequency information; and
a second stream of CNNs comprises second convolutional filter weights modified by a second contrast sensitivity function **characterized by** sensitivity to high spatial frequency and low temporal frequency information.

12. The computer-implemented method of claim 11, wherein an output of the first stream of CNNs and an output of the second stream of CNNs are fused to model visual streams in a visual area (V1) of a primary visual cortex.

13. The computer-implemented method of claim 1, further comprising:
transforming, prior to processing the input image, the input image using a point spread function configured to model optical transfer properties of lens and optics of a human eye.

14. A computing device comprising:

a processor; and
memory;
wherein the computing device is arranged to perform, using the processor, a method according to any of claims 1 to 13.

15. A computer program product arranged, when executed on a computing device comprising a processor or memory, to perform a method according to any of claims 1 to 13.

Input image $x$

Lens + Optics

PSF

Cone Mosaic Sampling

2

Low-Level Vision (Retina + LGN)

Parasol Transform

Midget Transform

Magnocellular

Parvocellular

3

High-Level Vision (visual cortex)

V1 (4cα) + Median Temporal (MT)

Fusion

V1 (4cβ)

4

Mapping

5

1

[0.1, 0.2, 0.5, 0.1, 0.1] MOS predictions

e.g. Parvocellular

Conv

Gain control

Transform + CSF

Conv

Fig. 1

1100

```
                    ┌─────────────────────────────────┐
        1110        │ Receive image data representing  │
                    │ one or more images              │
                    └─────────────────────────────────┘
                                   │
                                   ▼
                    ┌─────────────────────────────────┐
                    │ Transform image data using point │
        1120        │ spread function that models      │
                    │ optical transfer properties of   │
                    │ lens and optics of the human eye │
                    └─────────────────────────────────┘
                                   │
                                   ▼
                    ┌─────────────────────────────────┐
                    │ Process transformed image data   │
                    │ using first artificial neural     │
        1130        │ network system that models       │
                    │ generation of signals from images │
                    │ by human eye                     │
                    └─────────────────────────────────┘
                                   │
                                   ▼
                    ┌─────────────────────────────────┐
                    │ Process output of first artificial│
                    │ neural network using second      │
        1140        │ artificial neural network system  │
                    │ that models processing of signals │
                    │ by human visual cortex           │
                    └─────────────────────────────────┘
                                   │
                                   ▼
                    ┌─────────────────────────────────┐
        1150        │ Decode output of second artificial│
                    │ neural network system to output   │
                    │ image data                       │
                    └─────────────────────────────────┘
```

Fig. 2

Fig. 3(a)

$$g(\Theta_{10}^{1}x_0 + \Theta_{11}^{1}x_1 + \Theta_{12}^{1}x_2 + \Theta_{13}^{1}x_3)$$

$\Theta_{13}^{1}$ means:

1 (superscript) - mapping from layer 1
1 - mapping to node 1 in layer 2 (L+1)
3 - mapping from node 3 in layer 1 (L)

Layer 1        Layer 2        Layer 3

$$\alpha_1^{(2)} = g(\Theta_{10}^{(1)}x_0 + \Theta_{11}^{(1)}x_1 + \Theta_{12}^{(1)}x_2 + \Theta_{13}^{(1)}x_3)$$

$$\alpha_2^{(2)} = g(\Theta_{20}^{(1)}x_0 + \Theta_{21}^{(1)}x_1 + \Theta_{22}^{(1)}x_2 + \Theta_{23}^{(1)}x_3)$$

$$\alpha_3^{(2)} = g(\Theta_{30}^{(1)}x_0 + \Theta_{31}^{(1)}x_1 + \Theta_{32}^{(1)}x_2 + \Theta_{33}^{(1)}x_3)$$

Fig. 3(b)

$$h_\Theta(x) = \alpha_1^{(3)} = g(\Theta_{10}^{(2)}\alpha_0^{(2)} + \Theta_{11}^{(2)}\alpha_1^{(2)} + \Theta_{12}^{(2)}\alpha_2^{(2)} + \Theta_{13}^{(2)}\alpha_3^{(2)})$$

Fig. 3(c)

Fig. 4(a)

Fig. 4(b)

Fig. 4(c)

Fig. 5

Fig. 6(a)

Fig. 6(b)

Fig. 7

Fig. 8

Fig. 9

1000

Fig. 10

Receive image data representing one or more images — 1010

Transform image data using point spread function that models optical transfer properties of lens and optics of the human eye — 1020

Process transformed image data using first artificial neural network system that models generation of signals from images by human eye — 1030

Process output of first artificial neural network using second artificial neural network system that models processing of signals by human visual cortex — 1040

Map output of second artificial neural network system to perceptual quality score — 1050

2000

Receive training image data representing one
or more images and corresponding desired
perceptual quality scores

2010

Process image data using model to generate
model output data indicative of perceptual
quality score

2020

Determine loss function from desired and
generated perceptual quality scores

2030

Adjust weights of artificial neural networks of
model by backpropagation of errors

2040

Fig. 11

1200

1201

1202

1203

Fig. 12

1300

1310 — Task images

1320 — Convolutional layer

Orientation selectivity

0   45   90   135

$L_{CV}$

1330 — Convolutional layer

Spatial frequency selectivity

2  4  6  8  10 12 14

$L_{softmax}$

● ● ●

$L_{task}$

Fig. 13

Fig. 14

Fig. 15

Fig. 16

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, ZHOU et al.** Image quality assessment: from error visibility to structural similarity. *IEEE transactions on image processing*, 2004, vol. 13 (4), 600-612
- **LUBIN, JEFFREY**. A visual discrimination model for imaging system design and evaluation.. *Vision Models for Target Detection and Recognition: In Memory of Arthur Menendez.*, 1995, 245-283
- **LAPARRA, VALERO et al.** Perceptual image quality assessment using a normalized Laplacian pyramid.. *Electronic Imaging*, 2016, vol. 2016 (16), 1-6
- **SHEIKH, HAMID R.** ; **ALAN C. BOVIK.** A visual information fidelity approach to video quality assessment.. *The First International Workshop on Video Processing and Quality Metrics for Consumer Electronics.*, 2005, vol. 7 (2)
- **LI, SONGNAN et al.** Image quality assessment by separately evaluating detail losses and additive impairments. *IEEE Transactions on Multimedia*, 2011, vol. 13 (5), 935-949
- **WATSON, ANDREW B.** ; **MATHIAS TAYLOR** ; **ROBERT BORTHWICK.** DCTune perceptual optimization of compressed dental X-Rays. *Medical Imaging*, 1997, vol. 3031
- *International Society for Optics and Photonics*, 1997

- The steerable pyramid: A flexible architecture for multi-scale derivative computation.. **SIMONCELLI, EERO P.** ; **WILLIAM T. FREEMAN.** Proceedings, International Conference on Image Processing.. IEEE, 1995, vol. 3
- **CARANDINI, MATTEO** ; **DAVID J. HEEGER.** Normalization as a canonical neural computation.. *Nature Reviews Neuroscience*, 2012, vol. 13 (1), 51-62
- **BALLÉ, JOHANNES** ; **VALERO LAPARRA** ; **EERO P. SIMONCELLI**. Density modeling of images using a generalized normalization transformation. *arXiv preprint arXiv:1511.06281*, 2015
- **DZIEDZIC, A** ; **PAPARRIZOS, J** ; **KRISHNAN, S.** ; **ELMORE, A.** ; **FRANKLIN, M.** Band-limited Training and Inference for Convolutional Neural Networks.. *PMLR*, 2019, https://developer.nvidia.com/cudnn
- **LI, S.** ; **ZHANG, F** ; **MA, L** ; **NGAN, K. N**. Image quality assessment by separately evaluating detail losses and additive impairments.. *IEEE Transactions on Multimedia*, 2011, vol. 13 (5), 935-949, https://doi.org/10.1109/TMM.2011.2152382
- Generative Adversarial Nets.. **GOODFELLOW, I. J.** ; **POUGET-ABADIE, J.** ; **MIRZA, M** ; **XU, B.** ; **WARDE-FARLEY, D** ; **OZAIR, S** ; **COURVILLE, A** ; **BENGIO, Y**. Advances in Neural Information Processing Systems. Associates, Inc, 2014, vol. 27, 2672-2680